Europäisches Patentamt

European Patent Office

Office européen des brevets

(11) Veröffentlichungsnummer : **0 375 839 B1**

## (12) EUROPÄISCHE PATENTSCHRIFT

(45) Veröffentlichungstag der Patentschrift :
**11.11.92 Patentblatt 92/46**

(51) Int. Cl.⁵ : **F16F 13/00**

(21) Anmeldenummer : **89116604.3**

(22) Anmeldetag : **08.09.89**

(54) **Hülsengummifeder.**

(30) Priorität : **26.11.88 DE 3839914**

(43) Veröffentlichungstag der Anmeldung :
**04.07.90 Patentblatt 90/27**

(45) Bekanntmachung des Hinweises auf die
Patenterteilung :
**11.11.92 Patentblatt 92/46**

(84) Benannte Vertragsstaaten :
**AT BE CH DE ES FR GB IT LI NL SE**

(56) Entgegenhaltungen :
**DE-A- 3 804 123**

(56) Entgegenhaltungen :
**FR-A- 2 495 718**
**FR-A- 2 555 688**
**PATENT ABSTRACTS OF JAPAN, Band 10, Nr.
29 (M-451)[2086], 5. Februar 1986; & JP-A-60
184 740 (KURASHIKI KAKOU) 20-09-1985**
**PATENT ABSTRACTS OF JAPAN, Band 10, Nr.
6 (M-445)[2063], 11. Januar 1986; & JP-A-60 168
931 (NISSAN JIDOSHA) 02-09-1985**

(73) Patentinhaber : **Firma Carl Freudenberg
Höhnerweg 2-4
W-6940 Weinheim/Bergstrasse (DE)**

(72) Erfinder : **Schwerdt, Hans-Werner
Lortzingstrasse 4
W-6947 Laudenbach (DE)**

EP 0 375 839 B1

## Beschreibung

Die vorliegende Erfindung betrifft eine hydraulisch dämpfende Hülsengummifeder gemäß dem Oberbegriff des Anspruchs 1.

Bei der Aggregatelagerung in Kraftfahrzeugen sowie an der Fahrwerksaufhängung treten sowohl vertikale Schwingungen als auch - resultierend aus dem Fahrbetrieb - solche in Fahrzeuglängsrichtung auf, wobei die letzteren aus Beschleunigungs-, Verzögerungs- und Gaswechselreaktionen herrühren können. Dabei wird aus Komfortgründen eine hohe Elastizität der Dämpfungselemente gefordert. Andererseits jedoch sollen Lagerpunkte im Fahrwerk, die durch Bremskräfte belastet werden, aus Gründen der Fahrsicherheit eine hohe Steifigkeit mit kleinen Federwegen aufweisen.

Zur Lösung dieses Dilemmas wurden bisher in der Praxis Hülsengummifedern eingesetzt, die unterschiedliche Steifigkeit und Federwege in den verschiedenen Richtungen aufwiesen. Dies wurde erreicht entweder allein durch Material-oder allein durch hydraulische Dämpfung.

FR-A- 2 555 688 befaßt sich mit einem elastischen Lager geringer Steifigkeit, bei dem jeweils zwei aus einer starren Armierung bestehende Untereinheiten und mindestens ein Block aus vulkanisiertem Elastomer miteinander verbunden sind, wobei die Untereinheiten so angeordnet sind, daß die durch die Elastomerblöcke jeder Untereinheit verlaufenden Symmetrieebenen in einem Winkel von 90° zueinander angeordnet sind und die Elastomerblöcke somit unter den auf sie einwirkenden Kräften im wesentlichen in Scherbeanspruchung arbeiten. In dieser Druckschrift wird unter Figur 9 eine Variante beschrieben, die zwei Untereinheiten aufweist, welche durch Rohre und Elastomerblöcke gebildet werden. Elastomerfüllungen, die in ihrer Beschaffenheit und Dämpfungseigenschaften von den Charakteristiken der Elastomerblöcke abweichen, sind im Raum zwischen letzteren vorhanden, diesen ganz oder teilweise ausfüllend.

Eine der Darstellungen zeigt eine Variante, bei der die Elastomerelemente aus einem in die Hohlräume eingeführten, zentralen Körper und aus zwei an dessen Enden befestigten, weichelastischen, überstehenden Teilen bestehen, die diesen im Lager in der richtigen Position halten.

FR-A- 2 495 718 beschreibt eine hydraulische Hülsengummifeder, bei der im Kraftweg zwischen starren Anschlüssen zumindest eine Zwischenmasse zwischen elastischen Teilen aus gummiartigem Material sowie zumindest ein ein hydraulisches Dämpfungsmedium enthaltender Dämpfer liegen, wobei der Dämpfer mit den Anschlüssen nur über elastische Teile in Verbindung steht.

Die nicht vorveröffentlichte DE-A 3 804 123 gibt eine hydraulisch gedämpfte Lagerbuchse an, bei der die Hydraulikkammern membranartige, in Richtung ihrer Flächennormalen innerhalb eines vorgegebenen Freiweges vorformbare Wandungsteile aufweisen.

Es ist eine Hülsengummifeder vorgeschlagen worden, die beiderseits des Innenteils innerhalb der Elastomerkörper (Federkörper) zusätzliche axiale Kammern enthält, die mindestens zu einem der stirnseitigen Kanäle hin, die durch den Elastomerkörper und gegenüberliegende, elastomere Kappen gebildet werden, offen sind (DE-A-36 05 505). Ferner ist mindestens eine weitere, geschlossene, nicht mit den übrigen Kammern hydraulisch verbundene Kammer mit einem Füllstoff, offensichtlich Luft, gefüllt. Diese Ausgestaltung soll eine hydraulische Dämpfung, insbesondere im akustischen Frequenzbereich, nicht nur bei Belastung bzw., Schwingungen in vertikaler Richtung, sondern auch in horizontaler Richtung ermöglichen.

Diese bevorzugte Berücksichtigung des akustischen Frequenzbereichs geht jedoch zu Lasten der Isolierfähigkeit gegen hohe Frequenzen, da das Hydrauliksystem die normalerweise recht niedrige Federsteifigkeit des Elastomeren stark erhöht. Es sind daher bei einer solchen Ausgestaltung von Hülsengummifedern hochelastische Elastomere mit sehr geringer Eigendämpfung erforderlich. Es ergibt sich damit zwar eine sehr hohe Dämpfung in einem engen Frequenzbereich; außerhalb dessen ist jedoch die Dämpfung nahezu null.

Um ferner eine solche Hülsengummifeder dahingehend zu modifizieren, daß sie in verschiedenen Krafteinleitungsrichtungen gezielt einstellbare, unterschiedliche Dämpfungsraten aufweist, ist eine maßgenaue und schwer vorhersagbare Modifizierung der Abmessungen der stirnseitigen Kanäle sowie der zusätzlichen axialen Kammern erforderlich.

JP-A- 60-184740 löst die Aufgabe, zum einen eine gute Dämpfung tieffrequenter Schwingungen mit großen Amplituden und zum anderen eine gute Isolierung hochfrequenter Schwingungen mit kleinen Amplituden zu erzielen. Die erstgenannte Forderung wird durch Flüssigkeitsverlagerungen zwischen zwei Fluidkammern über einen Dämpfungskanal erfüllt, während die zweite Aufgabe durch zwei geschlossene, mit Luft gefüllte Kammern gelöst ist.

Dabei sind ein erstes Federelement am Innenrohr und ein zweites Federelement am Außenrohr festgelegt. Zwei einander gegenüberliegende Fluidkammern sind durch Ausnehmungen im inneren Federelement gebildet, symmetrisch dazu angeordnet und flüssigkeitsleitend über einen Dämpfungskanal miteinander verbunden. Der Dämpfungskanal umschließt das Innenrohr umfangsseitig. Die Luftkammern sind im äußeren Federelement angeordnet, durch eine zylindrische Abschlußwand begrenzt und durch eine Membran jeweils den Fluidkammern benachbart zugeordnet.

Die vorliegende Erfindung hat zur Aufgabe, eine hydraulische Hülsengummifeder der letztgenannten Gattung dahingehend auszugestalten, daß sie - neben der in einem bestimmten Frequenzband wirksamen, hydraulischen Dämpfung - noch eine zusätzliche Dämpfung ausübt, welche in bezug auf die Richtung der hydraulischen Dämpfung mit einfachen konstruktiven Maßnahmen beliebig auszurichten ist. Auch die Federsteifigkeit soll in Richtung der Krafteinleitung besonders niedrig und in verschiedenen Richtungen unterschiedlich eingestellt werden können derart, daß Federelemente mit einem hohen Quersteifigkeitsverhältnis vorliegen.

Diese Aufgabe wird gelöst durch eine Hülsengummifeder mit den Merkmalen des Anspruchs 1.

Eine solchermaßen ausgelegte Hülsengummifeder würde weitgehend den im realen Fahrbetrieb auftretenden Krafteinwirkungen bezüglich Federung und Dämpfung gerecht.

Das Prinzip der Wirkungsweise ist bei Füllung der geschlossenen Kammern mit polymeren, festen Füllstoffen dergestalt, daß bei Krafteinleitung in das Innenrohr die elastische Trennwand eine Durchbiegung erfährt, wobei auch die in den ohne Verbindung vorliegenden, d.h. passiven, Kammern angeordneten Füllstoffe mitverformt werden. Außerdem wird dabei, wie bei bekannten Vorrichtungen, die Hydraulikflüssigkeit durch Kanäle der offenen Kammern gedrängt.

Die Gesamtdämpfung setzt sich somit zusammen aus der hydraulischen Kanalreibung und - neuerungsgemäß - der Materialdämpfung der Füllstoffe in der oder den geschlossenen Kammer(n) und ist dementsprechend höher als bei bekannten Hydrobuchsen. Auch wenn die Reibungsdämpfung der hydraulischen Kanäle gegen 0 geht, ist somit noch eine Dämpferwirkung infolge der Materialdämpfung vorhanden; und dies gilt auch für beliebig schräge Krafteinwirkungs-Winkel.

Bei Fluidfüllung kann durch Ausnutzung der Kompressibilität des Fluids die Elastizität der geschlossenen Kammern variiert werden: Als Füllung sind insbesondere zweckmäßig die gleiche Hydraulikflüssigkeit wie in den offenen Kammern oder ein Gas, vorzugsweise Luft. Grundsätzlich gilt dabei, daß Fluidfüllungen in den geschlossenen Kammern zu niedriger Steifigkeit und damit niedriger Dämpfung führen.

In jedem Fall ist es möglich, und dies ist ein besonderer Vorteil der Erfindung, nach Bedarf die geschlossene Kammer oder Kammern entweder in Krafteinleitungsrichtung, quer oder schräg dazu anzuordnen und somit Richtungen mit bevorzugter Dämpfungswirkung vorzusehen. Diese Variationen werden in den Figurenbeispielen später noch näher erläutert werden.

Die festen Füllstoffe für die geschlossenen Kammern bestehen aus polymeren Elastomer-Materialien, deren Dämpfungseigenschaften von denjenigen des elastomeren Federkörpers verschieden sind.

Ferner wird eine Kombination der dämpfenden Eigenschaften eines gasförmigen Fluids mit denjenigen eines elastomeren Füllstoffes erreicht, wobei elastomerer Füllstoff die geschlossene(n) Kammer(n) nur teilweise ausfüllt; das Restvolumen ist dabei zweckmäßig Luft. Das dabei vorliegende Spiel zwischen Füllstoff und Federkörper, gedämpft durch ein Luftvolumen, bewirkt eine Phasenverschiebung der Schwingungen und eine Absenkung der dynamischen Steifigkeit; die geschlossene Kammer hat somit Tilgereigenschaften. Der dabei am wirksamsten tilgbare Frequenzbereich ist durch Vorversuche leicht zu ermitteln.

Die Dämpfungseigenschaften der erfindungsgemäßen Hülsengummifeder können dadurch anisotrop eingestellt werden, daß eine der geschlossenen Kammern mit einem elastomeren Füllstoff, die andere mit einer fluiden Füllung versehen ist. Es erfolgt eine asymmetrische Veformung des Federkörpers, wenn die geschlossenen Kammern dabei nicht in Krafteinleitungsrichtung angeordnet sind.

Die folgenden Figuren sollen beispielhaft die Erfindung näher verdeutlichen. Die geschlossenen Kammern sind in Krafteinleitungsrichtung angeordnet, jeweils in symmetrischer oder asymmetrischer Lage zueinander.

Die dargestellte Hülsengummifeder besteht aus einem Innenrohr 1, einem Außenrohr 2, einer Verschlußhülse 3 und einem inneren Federkörper 4.

Die offenen, mit Hydraulikflüssigkeit gefüllten Kammern 5, 6 sind über Drosselöffnungen 7, 8 miteinander verbunden. Erfindungsgemäß sind im Federkörper 4 geschlossene Kammern 9 ohne Verbindungskanal vorgesehen, die mit Fluid oder mit Füllstoff 11 zumindest teilweise gefüllt sind.

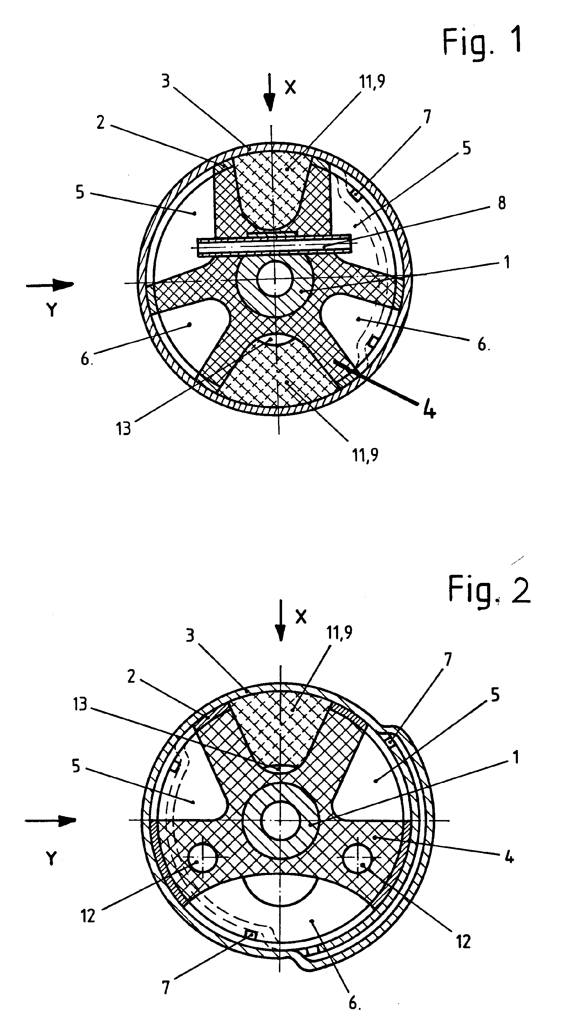

Es sei Figur 1 betrachtet: Sie zeigt einen Federkörper 4 und mit Hydraulikflüssigkeit gefüllte Kammern 5 und 6. Die Flüssigkeitsdämpfung wirkt dabei naturgemäß nur in einem schmalen Frequenzband.

Figur 1 zeigt, daß sowohl in X-Richtung als auch in Y-Richtung eine Dämpfung wirksam ist, welche sich additiv aus der hydraulischen Kanalreibung und aus der Materialdämpfung der Füllstoffe 11 zusammensetzt.

Durch die Wahl eines weichen dämpfenden Elastomeren als unterer Füllstoff 11, der so geformt ist, daß er eine luftgefüllte Druckausgleichskammer 13 umschließt, kann die Federsteifigkeit in Auflagerichtung X niedrig gehalten werden, während sie in Gegenrichtung durch Einsatz eines härteren Füllstoffes 11 (oben in der Zeichnung) deutlich höher ist. Die dargestellte Auslegung einer Hülsengummifeder federt ein auf ihr gelagertes Aggregat weich ein, während die Ausfederung progressiv begrenzt wird. Es sind Steifigkeitsverhältnisse X:Y bis zu 4:1 erzielbar.

Figur 2 zeigt eine Hülsengummifeder, die drei hydraulisch aktive Kammern 5, 6 aufweist. Die geschlossene Kammer 9 wird nur zum Teil von einem Elastomerkörper 11 ausgefüllt; das verbleibende Restvolumen ist mit Luft gefüllt und dient als Druckausgleichskammer 13: Bei statischer Vorlast in Richtung X vergrößert sich diese Druckausgleichskammer 13, wodurch darin Unterdruck entsteht. Die Trennwände zwischen den hydraulischen Kammern 5, 6 sind hier mit Axialbohrungen 12 versehen.

Eine Schwingung aus Richtung X wird durch zweifache dynamische Kanalreibung gedämpft. Die statische Federsteifigkeit des Federkörpers ist in Krafteinleitungsrichtung niedrig, in Gegenrichtung jedoch hoch infolge der als Anschlag wirkenden Elastomerfüllung 11. Die Federkennlinie ist dabei stark progressiv.

Insgesamt tritt bei dieser Konstruktion eine besonders niedrige dynamische und statische Federsteifigkeit in X-Richtung auf. Diese wird gemäß Figur 2 noch dadurch weiter erniedrigt, daß Axialbohrungen 12 in den Trennwänden zwischen den hydraulisch verbundenen Kammern 5, 6 vorgesehen sind.

Eine Hülsengummifeder in der Ausgestaltung der Figur 2 kann eingesetzt werden als Motorlagerung, welche Auflagerkräfte und Querschwingungen hydraulisch dämpft und bei der Querschwingungen in Richtung Y zusätzlich noch durch Materialdämpfung eliminiert werden. Das Ausfedern des Motors in Richtung (-X) wird gedämpft und progressiv begrenzt.

Bezugszeichenliste

1. Innenrohr
2. Außenrohr
3. Verschlußhülse
4. Federkörper
5. Obere hydraulische Kammer
6. Untere hydraulische Kammer
7. Drosselöffnung
8. Drosselöffnung
9. Geschlossene Kammer ohne Verbindungskanal
11. Füllstoff
12. Axialbohrung durch Trennwand
13. Druckausgleichskammer
X Bezugsrichtung bei Krafteinwirkung
Y Bezugsrichtung rechtwinklig zu X

**Patentansprüche**

1. Hydraulisch dämpfende Hülsengummifeder, bestehend aus einem Innenrohr (1), einem mit Zwischenraum dazu angeordneten Außenrohr (2) und einem in dem Zwischenraum angebrachten, mit beiden haftend verbundenen Federkörper (4) aus elastomerem Material, in welchem mindestens zwei durch eine Trennwand getrennte, flüssigkeitsgefüllte, offene Kammern (5, 6) über den Umfang verteilt angeordnet sind, die durch Drosselöffnungen (7, 8) miteinander verbunden sind, wobei die Hülsengummifeder noch mindestens eine weitere mit einem Füllstoff (11) gefüllte, geschlossene Kammer (9) in ihrem Federkörper (4) enthält, die nicht mit den übrigen Kammern (5, 6) hydraulisch verbunden ist, dadurch gekennzeichnet, daß der Füllstoff (11) der mindestens einen Kammer (9) aus festem, polymerem Elastomer-Material besteht, welches bezüglich Federsteifigkeit und Dämpfungseigenschaften von dem Material des Federkörpers (4) verschieden ist, und daß der Füllstoff (11) die Kammer (9) bis auf ein mit Luft gefülltes, zum Innenrohr weisendes Restvolumen, welches eine Druckausgleichskammer (13) darstellt, vollständig ausfüllt.

2. Hydraulisch dämpfende Hülsengummifeder nach Anspruch 1, dadurch gekennzeichnet, daß zwei Kammern (9) vorgesehen sind, von denen eine den elastomeren Füllstoff (11), die andere eine fluide Füllung enthält.

**Claims**

1. A hydraulically damping rubber spring of the bushing type, comprising an inner tube (1), an outer tube (2), arranged with an intermediate space with respect to said inner tube, and a spring body (4) of elastomeric material, which is fitted in the intermediate space and is adhesively bonded to the two said tubes and in which at least two liquid-filled, open chambers (5, 6) are arranged in a distributed manner over the circumference, which chambers are separated by a dividing wall and are connected to one another through restrictor openings (7, 8), the rubber spring of the bushing type also containing in its spring body (4) at least one further, closed chamber (9), which is filled with a filling material (11) and is not hydraulically connected to the other chambers (5, 6), characterised in that the filling material (11) of the at least one chamber (9) is composed of solid, polymeric elastomer material, which in terms of resilience and damping properties is different from the material of the spring body (4), and in that the filling material (11) fills the chamber (9) completely apart from a residual volume which is facing the inner tube, is filled with air and represents a pressure-equalising chamber (13).

2. A hydraulically damping rubber spring of the bushing type according to claim 1, characterised in that two chambers (9) are provided, of which one contains the elastomeric filling material (11), the other contains a fluid filling.

## Revendications

1.  Ressort à manchon-caoutchouc à effet d'amortissement hydraulique, se composant d'un tube intérieur (1), d'un tube extérieur (2) entourant celui-ci avec volume intermédiaire, et d'un corps de ressort (4) en matière élastomère disposé dans le volume intermédiaire, relié aux deux tubes avec adhérence et dans lequel au moins deux chambres ouvertes (5, 6) remplies de liquide, séparées par une paroi séparatrice, sont disposées en étant réparties sur la périphérie et en étant reliées entre elles par des orifices d'étranglement (7, 8), le ressort à manchon-caoutchouc comportant encore dans son corps de ressort (4) au moins une autre chambre fermée (9), remplie d'une substance de remplissage (11) et qui n'est pas reliée hydrauliquement aux autres chambres (5, 6), ressort caractérisé en ce que la substance d'au moins une chambre (9) se compose d'une matière élastomère polymère solide, qui a une raideur élastique et des propriétés d'amortissement différentes de la matière du corps de ressort (4), et en ce que la substance de remplissage (11) remplit complètement la chambre (9) jusqu'à un volume résiduel rempli d'air, dirigé vers le tube intérieur et qui représente une chambre (13) d'équilibrage de pression.

2.  Ressort à manchon-caoutchouc à effet d'amortissement hydraulique selon la revendication 1, caractérisé en ce qu'il est prévu deux chambres (9) dont l'une contient la substance élastomère de remplissage (11) tandis que l'autre contient un remplissage fluide.

Fig. 1

Fig. 2